# EUROPEAN PATENT APPLICATION

(11) **EP 1 308 373 A1**
(43) Date of publication of application: **07.05.2003**
(21) Application number: 01126278.9
(22) Date of filing: 06.11.2001
(51) Int. Cl.: B62D 25/08, B62D 65/00

(54) **Multi-functional container for the engine compartment of motor vehicles**

(71) Applicant: Di Camillo, Dario, 10024 Moncalieri (TO) (IT)
(72) Inventor: Di Camillo, Dario, 10024 Moncalieri (TO) (IT)
(74) Representative: Di Francesco, Gianni

(57) **Abstract**

Description of a heat-resistant plastic container (6) adapted to be used in the engine compartment of motor vehicles of the type provided with cowling, consisting of a main central body (8) and of two secondary side bodies (9, 10) of basically rectangular parallelepiped shape. Said three bodies are made by means of a single processing and form a bridge-shaped container.

## Description

The present invention relates to a multifunctional container for the engine compartment of a motor vehicle, more in particular to a container presenting the shape of a "bridge" adapted to be inserted between the two front mudguards.

At the moment, inside the engine compartment of motor vehicles there are at least two containers, these containers not necessarily being watertight. One of the containers generally contains the air filter (in few types of truck only the air filter is not placed inside the engine compartment), while the other, which is not necessarily watertight, as in the case of the container for the air filter, contains the battery. Additional containers which can be placed in the engine compartment of motor vehicles can contain the water to clean the windshield, the liquid for fuses, the expansion tank of the radiator, and so on.

The above solution implies that the time required for assembly and design is very long. Besides, the containers often are of complicated shape in order to fit inside the engine compartment.

The overall costs of the motor vehicle are of course increased while the engine compartment is not very efficiently arranged.

It is an object of the present invention to solve the above problems.

Said object is achieved by means of the present invention relating to a multifunctional container presenting the characteristics set forth in claim 1.

Additional characteristics and advantages will become clear from the following description referring to the drawings provided as non restrictive example only and in which:

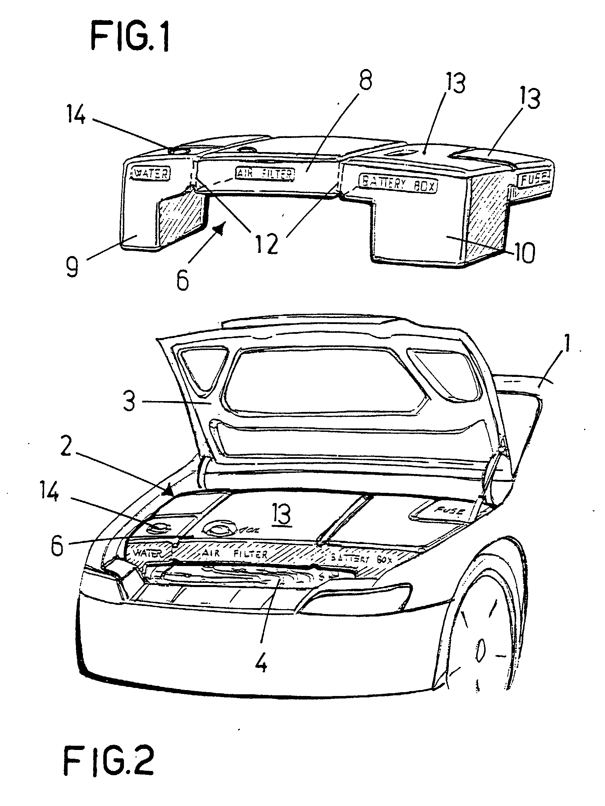

figure 1 is a perspective view of the container according to the invention,
figure 2 is a view of the container in figure 1 inserted in the engine compartment of a motor vehicle,
figure 3 is a view of the container in figure 1 located inside the engine compartment of a motor vehicle with a cowling of reduced dimensions,
figure 4 is a view of a second embodiment of the container according to the invention, located into the engine compartment of a motor vehicle with no cowling,
figure 5 and figure 6 are views of additional embodiments of the container according to the invention, the cowling being integral to the covers,
figure 7 is a view of a further embodiment of the container according to the invention, provided of a previous structure,
figure 8 is an application of the embodiment in figure 7 located into an engine compartment provided with cowling, and
figure 9 is an application of the embodiment in figure 7 with an integral engine compartment.

With reference to the figures, reference number 1 indicates a motor vehicle, more in particular a car, the engine compartment 2 of which is covered by a cover 3.

Inside the engine compartment, above the engine 4 and on special brackets (not shown being of very common use) there is the container according to the invention 6. The container is made of heat-resistant plastic material, its shape being that of a "bridge", that is it extends along the whole length of the cowling with a not very thick and basically parallelepiped central body 8 which fits between the engine 4 and the cowling 3 when the cowling is closed. At the ends of the body 8 there are two "feet" 9 and 10, consisting of two parallelepiped side bodies placed in vertical position and jointed to the central body in order to form a single container 6 presenting a "bridge" shape. The two feet 9 and 10 are placed in the engine compartment laterally to it.

Inner walls 12 (some of them indicated by broken lines) divide the inside compartment of the container 6 into watertight compartments of different shape. Said inner compartments are provided with lids 13 that can be made of deadening material, or with screw caps or pressure caps 14, according to their function. There will be, then, a compartment for the liquid to clean the windshield; a compartment for the air filter, one for fuses, one for the battery and also a compartment for the conduit intended to ton up or replace the oil of the engine. All these compartments jointed into the bridge-shaped structure, allow better arrangement inside the engine compartment an serve as excellent deadening filter, since they are located over and at the sides of the engine itself.

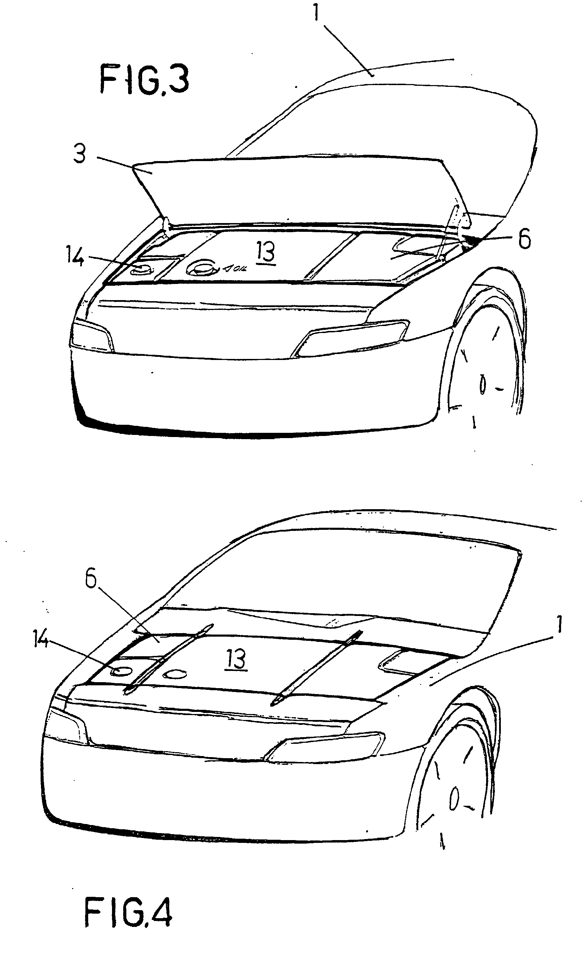

In a preferred embodiment of the invention, the external finishing of the different lids 13 and the caps 14 of the bridge-shaped container 6 will be as similar as possible to the finishing of the painting of the motor vehicle. This allows the manufacturer to prescind from the cowling by placing the container 6 with its upper part at the same level as the upper wall of the mudguard (fig.4), placing watertight gaskets of adequate profile (not shown) on the whole perimeter.

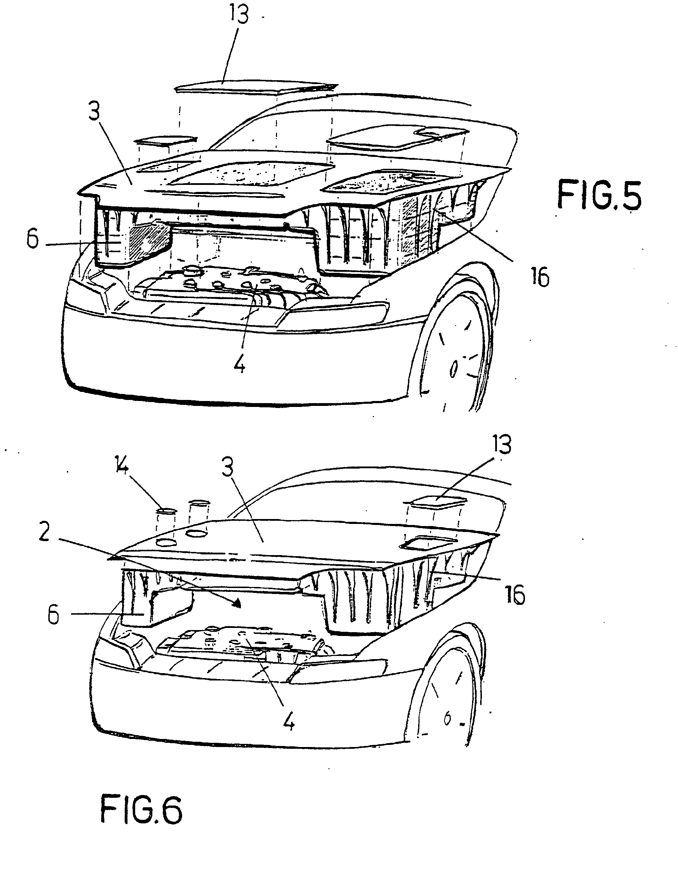

Figures 5 and 6 show a third preferred embodiment of the invention providing the bridge-shaped container 6 integral with the cowling 3. The cowling will then constitute the upper part of the container and will include all the lids and caps which are part of it. It can be made of plastic and therefore made by a single proceeding together with the container, or it can be made of metal and made afterwards integral with the plastic by means of a glueing procedure known *per se.*

Reinforcement ribbing 16 will be present at the projecting part of the cowling.

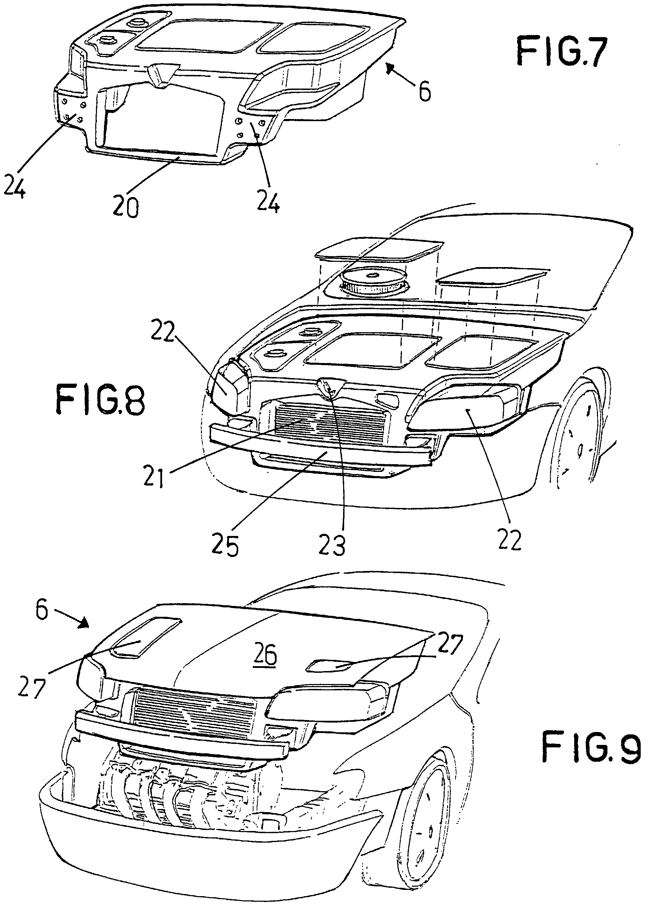

Figures from 7 to 9 show an additional embodiment of the invention. In this embodiment the bridge-shaped container 6 is provided with a front structure 20, its shape being basically rectangular, adequately connected to the body of the container and made as a single piece, serving both as support for the radiator 21 of the cooling system of the motor and as seat for the two front optical units 22 and presents a central notch for the engagement device 23 of the cowling. At the side of the seat of the radiator 21, the front structure 20 presents only two seats to fix the front bumper 24. While in figure 8 the container 6 provided with front structure 20 is designed to be inserted into an engine compartment provided with cowling, in figure 9 a cowling 26 is provided, the cowling being integral and provided with openings intended to reach the fillers more frequently used.

## Claims

1. Heat-resistant plastic container (6) adapted to be used in the engine compartment of motor vehicles of the type provided with cowling, **characterised in that** it consists of a main central body (8) of basically rectangular parallelepiped shape and of two secondary side bodies (9, 10) of basically rectangular parallelepiped the longer axis of which is perpendicular to the longer axis of said main body, said three bodies being made by means of a single processing and forming a bridge-shaped container.

2. Container as claimed in claim 1, **characterised in that** it is provided with inner walls (12) which divide it into at least two watertight compartments.

3. Container as claimed in claim 1, **characterised in that** it is provided with lids and/or caps (14) made of deadening material.

4. Container as claimed in claim 1, **characterised in that** the lids and caps (13, 14) of the container are integral part of the cowling (3) made integral with the bridge-shaped container (6).

5. Container as claimed in claim 1, **characterised in that** the lids and caps (13, 14) together form the cowling (3).

6. Container as claimed in claim 4, **characterised in that** the container is provided with supporting ribbing (16) at the projecting part of the cowling.

7. Container as claimed in claim 1, **characterised in that** it is provided with a front integral structure (20) presenting a basically rectangular shape adapted to support the radiator of the cooling circuit of the engine.

8. Container as claimed in claim 7, **characterised in that** the front structure presents seats intended to house the support of the front bumper (25).

9. Container as claimed in claim 7, **characterised in that** the front structure presents seats intended to house the front optical units (22).

10. Container as claimed in claim 7, **characterised in that** the front structure presents a seat intended to house the engagement device (23) of the cowling.

11. Container as claimed in claim 1 and 7, **characterised in that** the cowling (26) is integral with it.
